# EUROPÄISCHE PATENTSCHRIFT

(11) **EP 1 202 884 B1**
(45) Veröffentlichungstag und Bekanntmachung des Hinweises auf die Patenterteilung: **08.09.2004**
(21) Anmeldenummer: 01921165.5
(22) Anmeldetag: 09.03.2001
(51) Int. Cl.: B60S 1/00

(54) **Frontscheibenbereich eines Kraftfahrzeuges mit einer Wischeranlage**
Motor vehicle windscreen area including wiper system
Zone du pare-brise d'un véhicule à moteur avec système d'essuie-glace

(30) Priorität: 17.03.2000 DE 10013256
(43) Veröffentlichungstag der Anmeldung: 08.05.2002
(73) Patentinhaber: ROBERT BOSCH GMBH, 70442 Stuttgart (DE)
(72) Erfinder: WEILER, Michael, 76131 Karlsruhe (DE)
(74) Vertreter: Raue, Reimund, Dipl.-Ing.
(86) Internationale Anmeldenummer: PCT/DE2001/000881
(87) Internationale Veröffentlichungsnummer: WO 2001/068421

(56) Entgegenhaltungen:
- DE-A- 4 405 926
- DE-A- 19 738 232
- FR-A- 2 708 543
- FR-A- 2 710 600
- PATENT ABSTRACTS OF JAPAN vol. 017, no. 106 (M-1375), 4. März 1993 (1993-03-04) & JP 04 297355 A (MAZDA MOTOR CORP), 21. Oktober 1992 (1992-10-21)
- PATENT ABSTRACTS OF JAPAN vol. 018, no. 348 (M-1630), 30. Juni 1994 (1994-06-30) & JP 06 087408 A (MAZDA MOTOR CORP), 29. März 1994 (1994-03-29)

## Beschreibung

### Stand der Technik

Die Erfindung geht von einer Wischeranlage für Kraftfahrzeuge nach dem Oberbegriff des Anspruchs 1 aus.

Ein Scheibenwischer eines Kraftfahrzeugs überstreicht während einer Wischbewegung einen Wischbereich auf einer Fahrzeugscheibe, der durch seine beiden Wendelagen begrenzt ist. Wird der Scheibenwischer abgestellt, fährt er in eine Parkposition, die mit einer Wendelage übereinstimmen kann. In der Regel befindet sich die Parkposition an der tiefsten Stelle zur Motorhaube hin, so dass der Scheibenwischer in einer sogenannten Haubenspalte zwischen der Motorhaube und der Windschutzscheibe liegt. Erst beim Wischbetrieb wird er sichtbar und bewegt sich von der Parkposition aus nach oben bis in die obere Wendelage, von der aus er anschließend wieder zur unteren Wendelage oder Parkposition gelangt.

Wird dieses Prinzip bei Gleichlaufwischeranlagen angewendet, ist zwar die Sicht des Fahrers durch die geparkten Scheibenwischer nicht behindert, aber durch die relativ weite Haubenspalte entstehen Luftverwirbelungen, die sich aerodynamisch ungünstig auswirken und Geräusche verursachen. Bei Gegenlaufwischeranlagen können zudem die beiden Scheibenwischer in der Parkposition aufgrund ihrer Geometrie und des zu beschreibenden Wischfeldes oft nicht weit genug ineinander verschachtelt abgelegt werden, so dass sie in der Regel aus der Haubenspalte herausragen und deshalb für den Fahrer sichtbar sind. Erreichen die Scheibenwischer die windgeschützte Parkposition nicht, so werden diese vom Fahrtwind umströmt und es entstehen verstärkt Windgeräusche.

Aus der DE-44 05926 A1 ist eine Wischeranlage bekannt, bei der mindestens ein Scheibenwischer in der Parkposition parallel zu einer seitlichen Begrenzung der Windschutzscheibe, der so genannten A-Säule abgelegt ist. Der Scheibenwischer besitzt einen beweglichen Wischarm, der aus einem zur Windschutzscheibe hin offenen Profil besteht und ein Wischblatt teilweise überdeckt. In der Parkposition liegt der Wischarm seitlich in einer Nische der A-Säule der Fahrzeugkarosserie und seine äußere Kontur schließt sich annähernd bündig an die Kontur der Begrenzungssäule an. Das am Wischarm befestigte Wischblatt reicht jedoch nicht bis zur Begrenzungssäule, so dass ein Zwischenraum entsteht, der sich ungünstig auf den Luftwiderstand des Fahrzeugs auswirkt. Zudem erzeugt der unverdeckt geparkte Scheibenwischer durch das offene Profil des Wischblatts und durch den Spalt zwischen dem Wischblatt und der Säule Geräusche.

Ferner ist aus der JP 04 297355 A eine gattungsbildende Wischeranlage bekannt. An einer A-Säule eines Fahrzeugs ist eine Säulenverkleidung angebracht. Zwischen dieser und der Windschutzscheibe befindet sich ein Zwischenraum zur Ablage des Wischers. Wenn der Wischer nicht benutzt wird, wird das Wischblatt und gegebenenfalls zusätzlich ein Wischarm in den Ablageraum geschwenkt. Dadurch wird ein sichtbarer Bereich am unteren Rand der Windschutzscheibe gesichert. Ferner schließen zwei Flügel, die am Wischarm befestigt sind, während der Ablagezeit die Öffnung des Ablageraums. Dadurch wird verhindert, dass der Fahrtwind zum Wischarm strömt.

### Vorteile der Erfindung

Nach der Erfindung ist das Wischblatt als Flachbalkenwischblatt ausgebildet, wie es z.B. aus der DE 197 38 232 A1 bekannt ist. Es weist an der der Fahrzeugscheibe abgewandten Seite eine Dichtung auf, die sich in der Parkposition an die Abdeckung anschließt. Befindet sich der geparkte Scheibenwischer unter der an die Kontur der Fahrzeugkarosserie angepassten Abdeckung, werden einerseits der Luftwiderstand sowie die Geräusche während der Fahrt äußerst gering und andererseits wird das Aussehen des Fahrzeugs verbessert, da für das flache Wischblatt nur ein geringer Abstand zwischen der Abdeckung und der Fahrzeugscheibe erforderlich ist.

Das Wischblatt schließt in der Parkposition die Öffnung zwischen der Abdeckung und der Windschutzscheibe weit gehend und gut ab, so dass nur im Bereich zwischen der Abdeckung und der der Windschutzscheibe abgewandten Seite des Wischblatts ein schmaler Spalt offen bleibt. Um diesen zu verschließen, weist das Wischblatt nach der Erfindung in diesem Bereich eine zusätzliche Dichtung auf, die sich in der Parkposition des Scheibenwischers etwa bündig an die Abdeckung anschließt. Eine solche dichte Einheit zwischen Windschutzscheibe, Scheibenwischer und Abdeckung bewirkt neben einem geringeren Luftwiderstand auch einen Schutz gegenüber Umwelteinflüssen; besonders Schmutzteilchen lagern sich in weitaus geringerem Maße auf der Wischleiste ab. Gleichzeitig kann die Haubenspalte zwischen der Motorhaube und der Windschutzscheibe schmal ausfallen, so dass dadurch ebenfalls die Aerodynamik und das Aussehen des Fahrzeugs verbessert wird. Von Vorteil ist auch ein geringes Gewicht der Abdeckung.

Nach einer vorteilhaften Ausgestaltung der Erfindung ist der Wischarm als Blattfederwischarm ausgebildet, der mit einer flachen Abklappeinheit ausgestattet ist. Dies wirkt sich ebenfalls günstig auf die Dimensionierung des Zwischenraums unter der Abdeckung aus. Vorteilhafterweise besitzt er gleichzeitig noch ein wesentlich geringeres Gewicht als die herkömmlichen Wischarme aus einem U-Profil und einem Wischblatt mit einem üblichen Tragbügelsystem.

Nach einer weiteren vorteilhaften Ausgestaltung der Erfindung kann die Dichtung so ausgebildet werden, dass sie gleichzeitig die Funktion eines Spoilers übernehmen kann.

Nach einer weiteren vorteilhaften Ausgestaltung der Erfindung kann der Wischarm im montierten Zustand mit dem Wischblatt in der Parkposition zum Fahrgastraum durch eine Schwarzfärbung am Rand der Fahrzeugscheibe abgedeckt sein, so dass er von dieser Position aus der Sicht des Fahrers nicht gesehen wird, was ebenfalls den optischen Eindruck verbessert.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: eine Fahrzeugscheibe mit gegenläufigen Scheibenwischern einer erfindungsgemäßen Wischeranlage,
- Fig. 2: eine vergrößerte Schnittdarstellung gemäß der Linie II-II in Fig. 1, die nicht Teil der Erfindung ist,
- Fig. 3: eine erfindungsgemäße Variante zu Fig. 2,
- Fig. 4: eine Variante zu Fig.2, die nicht Teil der Erfindung ist.

### Beschreibung der Ausführungsbeispiele

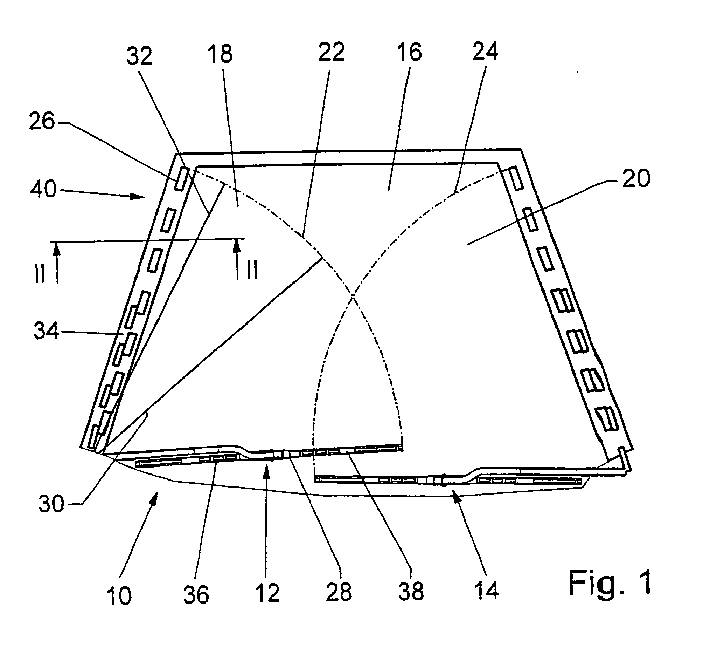

Eine Wischeranlage 10 für Kraftfahrzeuge besitzt zwei Scheibenwischer 12 und 14, welche eine Windschutzscheibe 16 überstreichen (Fig. 1). Die Scheibenwischer 12 und 14 bewegen sich während des Wischbetriebs gegenläufig und werden von einem hier nicht dargestellten Reversiermotor angetrieben.

Bei der Schwenkbewegung überstreicht der Scheibenwischer 12 ein Wischfeld 18 und der Scheibenwischer 14 ein Wischfeld 20 auf der Windschutzscheibe 16, deren Konturen durch die Begrenzungslinien 22 und 24 dargestellt sind. Die folgende Beschreibung bezieht sich nur noch auf den Scheibenwischer 12. Sie gilt aber entsprechend auch für den Scheibenwischer 14.

Eine untere Wendelage 28, in der sich der Scheibenwischer 12 befindet, begrenzt das Wischfeld 18. Aus dieser Position bewegt sich der Scheibenwischer 12 nach oben zu einer oberen Wendelage 32, die eine obere Begrenzung des Wischfelds 18 während der Schwenkbewegung bildet. Einige Grad nach der oberen Wendelage 32 befindet sich eine Parkposition 26, die der Scheibenwischer 12 nur einnimmt, wenn er abgestellt wird. In der Parkposition 26 befindet sich der Scheibenwischer 12 in einer annähernd senkrechten Lage und ist parallel zu einer seitlichen Begrenzung der Windschutzscheibe 16, einer so genannten A-Säule 40, unter einer Abdeckung 34 abgelegt. Um möglichst wenig Platz unter der Abdeckung 34 zu beanspruchen, sind zweckmäßigerweise der Wischarm 36 als Blattfederwischarm und das Wischblatt 38 als Flachbalkenwischblatt mit einer Wischleiste 42, 50 ausgebildet. Zur Montage oder zum Wechseln des Wischblatts 38 kann der Reversiermotor eine Serviceposition 30 anfahren, die zweckmäßigerweise in der Mitte zwischen der oberen 32 und unteren Wendelage 28 liegt und in welcher Reparaturarbeiten leicht durchgeführt werden können.

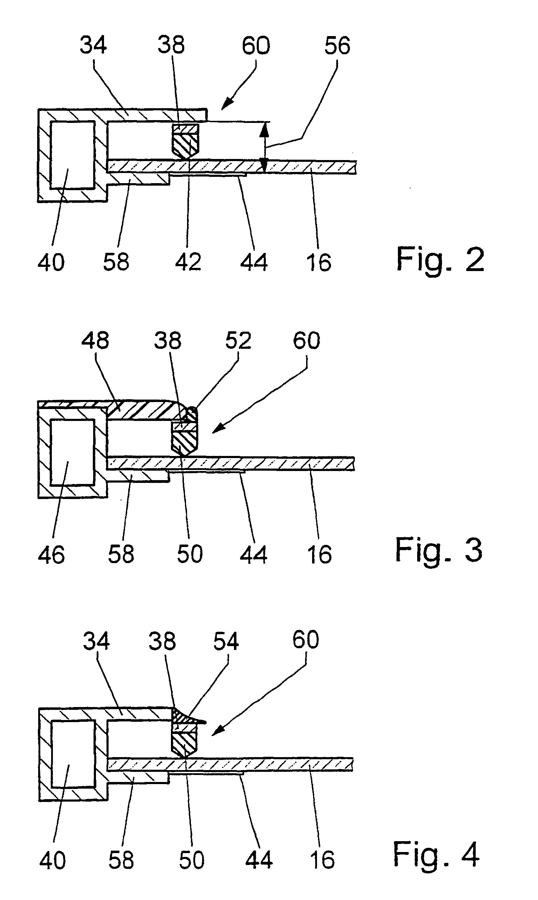

Fig. 2 zeigt einen Teilschnitt der Windschutzscheibe 16 und die A-Säule 40. Die Säule 40 besteht aus einem Hohlprofil und besitzt eine angeformte Auflagefläche 58 für die Windschutzscheibe 16. Die Säule 40 weist an der der Windschutzscheibe 16 zugewandten Seite eine angeformte Abdekkung 34 auf, die zu dieser einen Abstand 56 besitzt. Unter der Abdeckung 34 ist der Scheibenwischer 12 in der Parkposition 26 abgelegt. Dabei liegt eine am Wischblatt 38 befestigte Wischleiste 42 an der Windschutzscheibe 16 an und schließt eine zur Abdeckung 34 bestehende Öffnung 60 in diesem Bereich ab. Diese Ausführung, wobei der Scheibenwischer keine Dichtung aufweist, stützt den ersten Anspruch nicht und wird nicht beansprucht.

Um die Öffnung 60 vollständig abzuschließen, weist das Wischblatt 38 in einer Ausgestaltung der Erfindung an der der Windschutzscheibe 16 abgewandten Seite eine Dichtung 52 auf (Fig. 3), die zweckmäßigerweise aus Gummi besteht. Die Variante nach Fig. 3 zeigt eine Abdeckung 48, die mindestens teilweise als Kunststoffaufsatz ausgebildet ist und an der Säule 46 befestigt ist, beispielsweise angeklebt oder aufgeklipst. Um den Luftwiderstand zu reduzieren, weist die Abdeckung 48 im Bereich der Öffnung 60 eine abgerundete Kontur auf, die sich nahezu bündig an die Dichtung 52 anschließt.

Fig. 4 zeigt eine Dichtung 54, die als Spoiler ausgebildet ist. Der Spoiler 54 erhöht den Anpressdruck des Wischblatts 38 bei der Wischbewegung während der Fahrt. Ferner bildet er einen aerodynamisch günstigen Anschluss an die Abdeckung 34.

Aus optischen Gründen besitzt die Windschutzscheibe 16 in allen Ausgestaltungen im Bereich der Abdeckung 34 oder 48 zum Fahrgastraum hin eine Schwarzfärbung 44. Diese deckt den in der Parkposition abgelegten Scheibenwischer 12 ab, so dass er vom Fahrzeuginnenraum nicht zu sehen ist.

### Bezugszeichen

- 10: Wischeranlage
- 12: Scheibenwischer
- 14: Scheibenwischer
- 16: Windschutzscheibe
- 18: Wischfeld
- 20: Wischfeld
- 22: Begrenzungslinie
- 24: Begrenzungslinie
- 26: Parkposition
- 28: untere Wendelage
- 30: Serviceposition
- 32: obere Wendelage
- 34: Abdeckung
- 36: Wischarm
- 38: Wischblatt
- 40: A-Säule
- 42: Wischleiste
- 44: Schwarzfärbung
- 46: A-Säule
- 48: Abdeckung
- 50: Wischleiste
- 52: Dichtung
- 54: Spoiler
- 56: Abstand
- 58: Auflagefläche
- 60: Öffnung

## Patentansprüche

1. Wischeranlage (10) für Kraftfahrzeuge, bei der mindestens ein Wischarm (36) mit einem Wischblatt (38) eines Scheibenwischers (12, 14) im montierten Zustand in einer Parkposition (26) parallel zu einer seitlichen Begrenzung (40, 46) einer Fahrzeugscheibe (16) zwischen der Fahrzeugscheibe (16) und einer mit Abstand (56) zu dieser verlaufenden Abdeckung (34) abgelegt ist und die Öffnung (60) zwischen der Abdeckung (34) und der Fahrzeugscheibe (16) weit gehend abschließt, **dadurch gekennzeichnet, dass** das Wischblatt (38) als Flachbalkenwischblatt ausgebildet ist, welches an der der Fahrzeugscheibe (16) abgewandten Seite eine Dichtung (52, 54) aufweist, die sich in der Parkposition (26) an die Abdeckung (34) anschließt.

2. Wischeranlage (10) nach Anspruch 1, **dadurch gekennzeichnet, dass** der Wischarm (36) als Blattfederwischarm ausgebildet ist.

3. Wischeranlage (10) nach Anspruch 1 oder 2, **dadurch gekennzeichnet, dass** die Dichtung als Spoiler (54) ausgebildet ist.

4. Wischeranlage (10) nach einem der vorhergehenden Ansprüche, **dadurch gekennzeichnet, dass** der Wischarm (36) im montierten Zustand mit dem Wischblatt (38) in der Parkposition (26) zum Fahrgastraum durch eine Schwarzfärbung (44) am Rand der Fahrzeugscheibe (16) abgedeckt ist.

## Claims

1. Wiper system (10) for motor vehicles, in which at least one wiper arm (36) having a wiper blade (38) of a window wiper (12, 14), in the fitted position, is, in a parking position (26) parallel to a lateral boundary (40, 46) of a vehicle window (16), deposited between the vehicle window (16) and a covering (34) running at a distance (56) from the latter, and largely closes the opening (60) between the covering (34) and the vehicle window (16), **characterized in that** the wiper blade (38) is designed as a flat-bar wiper blade which, on the side facing away from the vehicle window (16), has a seal (52, 54) which adjoins the covering (34) in the parking position (26).

2. Wiper system (10) according to Claim 1, **characterized in that** the wiper arm (36) is designed as a leaf-spring wiper arm.

3. Wiper system (10) according to Claim 1 or 2, **characterized in that** the seal is designed as a spoiler (54).

4. Wiper system (10) according to one of the preceding claims, **characterized in that** the wiper arm (36), in the fitted state, with the wiper blade (38) in the parking position (26) is covered with respect to the passenger compartment by means of a black colouring (44) on the edge of the vehicle window (16).

## Revendications

1. Système d'essuie-glace (10) pour véhicules automobiles, dans lequel au moins un bras d'essuie-glace (36) doté d'une raclette (38) d'un essuie-glace (12, 14), dans l'état monté, est disposé, dans une position d'arrêt (26), parallèlement à une limitation latérale (40, 46) d'une vitre du véhicule (16), entre la vitre du véhicule (16) et un habillage (34) s'étendant à une certaine distance (56) de celle-ci, et obture pour l'essentiel l'ouverture (60) présente entre l'habillage (34) et la vitre du véhicule (16),
**caractérisé en ce que**
la raclette (38) est en forme de poutre plate, qui présente sur son côté opposé à la vitre du véhicule (16) un joint d'étanchéité (52, 54) qui se rattache, dans la position d'arrêt (26), à l'habillage (34).

2. Système d'essuie-glace (10) selon la revendication 1,
**caractérisé en ce que**
le bras d'essuie-glace (36) est configuré comme porte-balai à ressort-lame.

3. Système d'essuie-glace (10) selon la revendication 1 ou 2,
**caractérisé en ce que**
le joint d'étanchéité est en forme de déflecteur (54).

4. Système d'essuie-glace selon l'une des revendications précédentes,
**caractérisé en ce que**
dans l'état monté, le bras d'essuie-glace (36) doté de la raclette (38), est dans la position d'arrêt (26) occulté par rapport à l'habitacle, par une coloration noire (44) du bord de la vitre du véhicule (16).
